# EUROPEAN PATENT SPECIFICATION

(11) **EP 3 988 346 B1**
(45) Date of publication and mention of the grant of the patent: **12.04.2023**
(21) Application number: 21203664.4
(22) Date of filing: 20.10.2021
(51) Int. Cl.: B60C 19/00, B60C 15/06, H01Q 1/22, H01Q 1/36, B60C 15/00

(54) **TIRE**
REIFEN
PNEUMATIQUE

(30) Priority: 22.10.2020 JP 2020177482
(43) Date of publication of application: 27.04.2022
(73) Proprietor: Toyo Tire Corporation, Itami-shi, Hyogo 664-0847 (JP)
(72) Inventor: HOSOMI, Kazumasa, Hyogo, 664-0847 (JP)
(74) Representative: Müller-Boré & Partner Patentanwälte PartG mbB

(56) References cited:
- EP-A1- 3 632 705
- EP-A1- 3 632 709

## Description

### BACKGROUND OF THE INVENTION

### Field of the Invention

The present invention relates to a tire in which an electronic component is embedded.

### Related Art

Conventionally, a tire embedding an electronic component such as an RFID tag has been known. With such a tire, it is possible to carry out production management of the tire, usage history management, etc. by the RFID tag embedded in the tire and a reader as external equipment carrying out communication. For example, Patent Document 1 discloses a tire in which a communication circuit configured from an RFID, etc. storing identification information, history information and an electrically conductive belt or carcass cord are connected by a bypass wire, allowing part of the electrically conductive belt or carcass cord to function as a loop antenna.

Patent Document 1: Japanese Unexamined Patent Application, Publication No. 2004-13399

### SUMMARY OF THE INVENTION

According to the technology illustrated in Patent Document 1, it is possible to perform management of history information, etc. of a tire, by performing communication causing part of the belt or carcass cord for ensuring the rigidity of the tire to function as a loop antenna. However, in the design of the antenna, it is necessary to optimize the length of the antenna according to the frequency band to be used. More specifically, when considering the resonance condition of the antenna and radio waves, it is preferable for the length of the antenna to be set to a length such as half of the wavelength of the frequency to be used, or 1/4. However, in Patent Document 1, with the belt or carcass cord shown as the member constituting the antenna, the dimensions thereof tend to be influenced by measurement error upon manufacture. Consequently, it is difficult to accurately set the length of the antenna using these. In other words, when considering the measurement error upon manufacture, etc., it is difficult to consider that causing a part of the electrically conductive belt or carcass cord to function as a loop antenna is a preferable situation in terms of communication quality. In addition, with the technology disclosed in Patent Document 1, although an electronic component and a belt or carcass cord serving as an electrically conductive member are made to electrically contact intentionally; however, in the case of not having such an intention, if the electronic component and the electrically conductive member electrically contact, there is a possibility of a performance change of the electronic component occurring, and maintaining the characteristics of the electronic component becoming difficult. Document EP 3 632 705 A1 discloses an electronic component arranged between a metal reinforcement layer and the bead apex. Document EP 3 632 709 A1 discloses an electronic component arranged between the bead apex and the carcass body ply, in a bead region without a metal reinforcement layer.

The present invention has been made taking account of the above-mentioned problem, and an object thereof is to provide a tire which can maintain the characteristic of the electronic component, even when arranging the electronic component close to an electrically conductive member such as the steel side ply which serves as a metal reinforcement layer.

A tire of the present invention includes: a pair of beads having a bead core and a bead filler which extends to an outer side in the tire-radial direction of the bead core; a carcass ply including a ply body which extends from one bead core to another bead core, and a ply folding part which is folded back around the bead core; a metal reinforcement layer provided between the ply folding part and the bead filler; and an electronic component provided between the bead filler and the ply body.

According to the present invention, it is possible to maintain the characteristic of the electronic component, even when arranging the electronic component close to an electrically conductive member such as the steel side ply which serves as a metal reinforcement layer.

### BRIEF DESCRIPTION OF THE DRAWINGS

FIG. 1 is a view showing a half section in the tire-width direction of a tire according to a first embodiment;
FIG. 2 is a partial enlarged cross-sectional view of the tire in FIG. 1;
FIG. 3 is a view for explaining a steel side ply of a tire according to the above embodiment;
FIG. 4 is a view showing an RFID tag of the above embodiment;
FIG. 5A is a view showing the RFID tag protected by a protective member in a tire according to a second embodiment;
FIG. 5B is a view showing a cross section along the line b-b in FIG. 5A; and
FIG. 5C is a view showing a cross section along the line c-c in FIG. 5A.

### DETAILED DESCRIPTION OF THE INVENTION

### <First Embodiment>

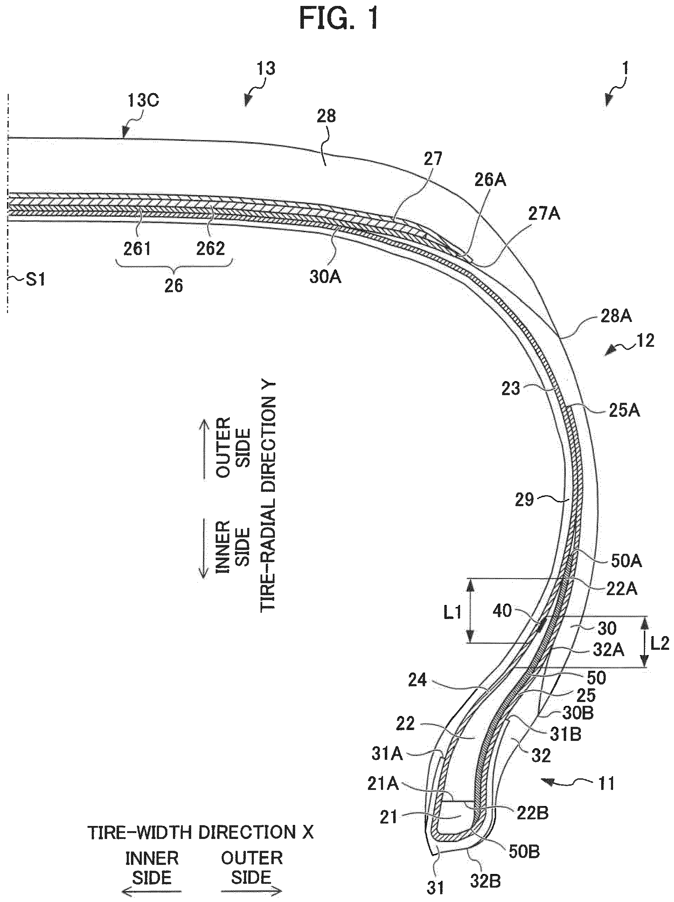

Hereinafter, a first embodiment of the present invention will be explained while referencing the drawings. FIG. 1 is a view showing a half section in a tire-width direction of a tire 1 according to the present embodiment. The basic structure of the tire 1 shows a cross-sectional view of the right half herein, due to being left/right symmetrical in the cross-section of the tire-width direction. In the drawings, the reference symbol S1 is the tire equatorial plane. The tire equatorial plane S1 is a plane orthogonal to the tire rotation axis, and is positioned in the center of the tire-width direction.

Herein, tire-width direction is a direction parallel to the tire rotation axis, and is the left/right direction of the paper plane of the cross-sectional view in FIG. 1. In FIG. 1, it is illustrated as the tire-width direction X. Then, inner side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer side of tire-radial direction is a direction distancing from the tire rotation axis, and is the upper side of the paper plane in FIG. 1. Inner side of tire-radial direction is a direction approaching the tire rotation axis, and is the lower side of the paper plane in FIG. 1.

It should be noted that the cross-sectional view of FIG. 1 is a tire-width direction cross-sectional view (tire meridian axis cross-sectional view) in a state mounting the tire to a standard rim, and filling the standard internal pressure. It should be noted that standard rim indicates a rim serving as a standard decided by JATMA to correspond to the tire size. In addition, standard internal pressure is 180 kPa in the case of the tire being for a passenger vehicle, for example.

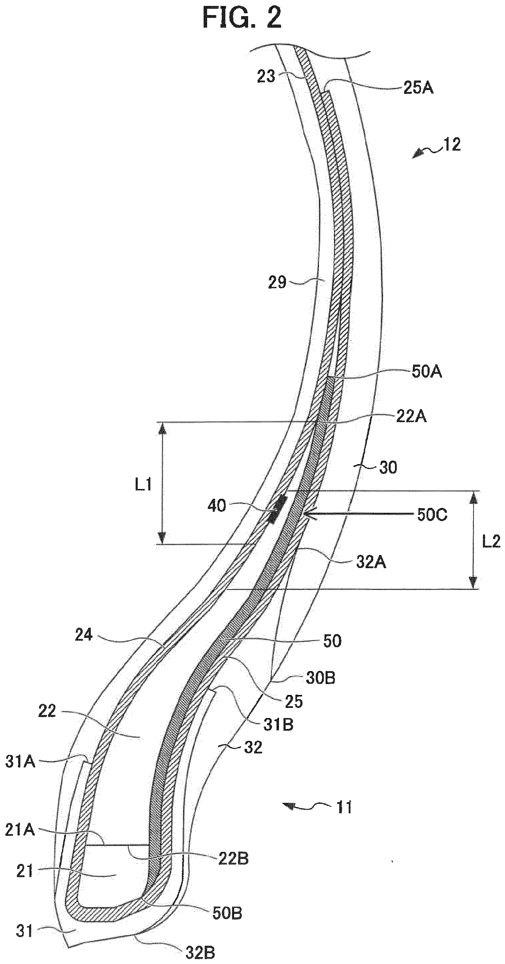

It should be noted that the aforementioned contents similarly apply for FIG. 2.

The tire 1 is a tire for passenger cars, for example, and includes a pair of beads 11 provided at both sides in the tire-width direction, a sidewall 12 which extends from each of the beads 11 to the outer side in the tire-radial direction; and annular tread 13 which connects to the outer side in the tire-radial direction of each of the sidewalls 12 and extends in the circumferential direction of the tire constituting the tire tread (contact patch with road surface R) 13C.

FIG. 2 shows an enlarged cross-sectional view in the periphery in a tire-radial direction inside region of the bead 11 and sidewall 12 of the tire 1 of the present embodiment shown in FIG. 1.

The bead 11 includes a bead core 21, and bead filler 22 extending to the outer side in the tire-radial direction of the bead core 21.

The bead core 21 is an annular member formed by wrapping around several times bead wires made of metal coated with rubber, and is a member which plays a role of fixing the tire 1 filled with air to the rim of a wheel which is not illustrated.

The bead filler 22 is a rubber member of tapered tip shape, extending to the outer side in the tire-radial direction of the bead core 21. The bead filler 22 has a tire-radial direction outside end 22A and a tire-radial direction inside end 22B. The tire-radial direction inside end 22B of the bead filler 22 contacts with the tire-radial direction outside end 21A of the bead core 21. The bead filler 22 is a member provided in order to raise the rigidity of the bead peripheral part and to ensure high maneuverability and stability. The bead filler 22 is configured by rubber of higher hardness than the rubber member of the surroundings, for example. The modulus of rubber constituting the bead filler is higher than at least the modulus of rubber constituting the inner liner 29 described later and the rubber constituting the sidewall 30.

A carcass ply 23 bridging between the pair of beads 11 is embedded inside of the tire 1. The carcass ply 23 configures a ply serving as the backbone of the tire 1, and is embedded within the tire 1, in a form passing through the pair of sidewalls 12 and the tread 13 between the pair of beads 11.

The carcass ply 23 includes the ply body 24 which extends from one bead core 21 to the other bead core 21 and exists between the tread 13 and bead 11; and the ply folding part 25 which is folded back around the bead core 21. In the present embodiment, the ply folding part 25 is overlapped with the ply body 24 in the region of the sidewall 12. A ply folding part 25 has an end 25A. In the present embodiment, the end 25A of the ply folding part 25 is positioned in a region of the sidewall 12.

The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by topping rubber. In the present embodiment, the ply rubber constituting the carcass ply 23 is arranged radially (radial direction) from the center of the tire 1. In other words, the tire 1 of the present embodiment is a so-called radial tire in which ply cords are arranged so as to extend radially.

It should be noted that the carcass ply 23 of the present embodiment is a single-layer structure carcass ply 23 including one layer of a ply body 24. However, the carcass ply 23 may be a multi-layer structure carcass ply 23 including a plurality of layers of ply body 24.

The bead 11 further includes a chamfer 31, rim-strip rubber 32 arranged on the outer side in the tire-width direction of the chamfer 31, and a steel-side ply 50 as a metal reinforcement layer.

The chamfer 31 is provided so as to cover the carcass ply 23 provided around the bead core 21. In more detail, the chamfer 31 is arranged so as to cover the inner side in the tire-width direction, the inner side in the tire-radial direction and the outer side in the tire-width direction of the carcass ply 23 at the circumference of the bead core 21. The chamfer 31 has a first end 31A arranged at the inner side in the tire-width direction of the ply body 24, and a second end 31B arranged at the outer side in the tire-width direction of the ply folding part 25 of the carcass ply 23. The chafer 31 is configured from rubber kneading fibers thereinto or rubber of high modulus, for example, and has relatively high strength among the constituent members constituting the tire 1. For example, the strength is higher than the inner liner 29 and side-wall rubber 30.

The rim stripper rubber 32 is arranged at the outer side in the tire-width direction of the chamfer 31 and the ply folding part 25 of the carcass ply 23, and is a rubber member in which the tire-width direction outer side thereof contacts with the rim (not illustrated) of the wheel when the tire 1 is mounted to the wheel. The rim strip rubber 32 has a tire-radial direction outside end 32A and tire-radial direction inside end 32B. The outer side in the tire-radial direction of this rim strip rubber 32 connects to the sidewall rubber 30.

The steel side ply 50 serving as the metal reinforcement layer is arranged between the ply folding part 25 of the carcass ply 23 and the outer side in the tire-width direction of the bead filler 22. The steel side ply 50 has a function of reinforcing the bead 11. The steel side ply 50 has a tire-radial direction outside end 50A and tire-radial direction inside end 50B. In the present embodiment, the tire-radial direction outside end 50A of the steel side ply 50 is more to an outer side in the tire-radial direction than the tire-radial direction outside end 22A of the bead filler 22, and is positioned more to the inner side in the tire-radial direction than the end 25A of the ply folding part 25. The steel side ply 50 has a portion arranged to be sandwiched between the tire-width direction outer side of the bead core 21 and ply folding part 25, and a portion arranged to be sandwiched between the tire-width direction outer side of the bead filler 22 and the ply folding part 25. In the present embodiment, the steel side ply 50 further has a portion arranged to be sandwiched between the ply body 24 and ply folding part 25.

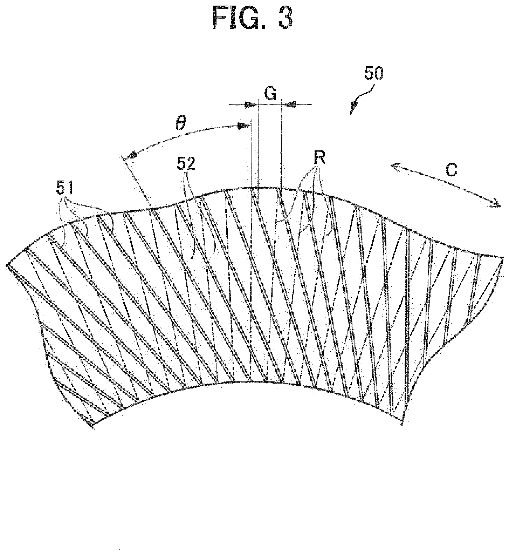

The steel side ply 50 of the present embodiment is configured from a metal fiber cord layer including metal fibers. FIG. 3 is a view for explaining the metal fiber cord layer configuring the steel side ply 50, and is a virtual view in the case of viewing the steel side ply 50 arranged within the tire 1 from the outer side in the tire-width direction towards the inner side in the tire-width direction. The steel side ply 50 is configured to include a plurality of metal cords 51 formed by twisting together a plurality of metal fibers, and rubber 52 as topping rubber integrating by coating a plurality of metal cords 51.

As shown in FIG. 3, the plurality of metal cords 51 configuring the steel side ply 50 extend obliquely relative to the radial direction R, and is arranged with spacing in the tire circumferential direction C in an oblique state. The angle θ formed between the radial direction R of the tire 1 and the extending direction of metal cords 51 of the steel side ply 50 is preferably at least 10° and no more than 40°. It should be noted that, in the present embodiment, the ply cord constituting the carcass ply 23 is arranged radially (radial direction) from the center of the tire 1. Consequently, in the present embodiment, the angle θ formed between the extending direction of the ply cord of the carcass ply 23 and the extending direction of the metal cord 51 of the steel side ply 50 becomes at least 10° and no more than 40°. In this way, by intersecting the ply cord of the carcass ply 23 and the metal cord 51 of the steel side ply 50, it is possible to raise the rigidity where the carcass ply 23 and steel side ply 50 overlap. It should be noted that the cord diameter of the metal cord 51 of the steel side ply 50 of the present embodiment is at least 0.5 mm and no more than 1.2 mm, for example.

The sidewall 12 includes the sidewall rubber 30 arranged at the outer side in the width direction of the carcass ply 23.

The sidewall rubber 30 is a rubber member constituting the outer wall surface of the tire 1. The sidewall rubber 30 has a tire-radial direction outside end 30A and tire-radial direction inside end 30B. This sidewall rubber 30 is a portion which bends the most upon the tire 1 exhibiting a cushioning action, and usually flexible rubber having fatigue resistance is adopted therein.

The tread 13 includes a steel belt 26 as a belt arranged on the outer side in the tire-radial direction of the carcass ply 23, a cap ply 27 arranged on the outer side in the tire-radial direction of the steel belt 26, and tread rubber 28 arranged on the outer side in the tire-radial direction of the cap ply 27.

The steel belt 26 is configured by a plurality of steel cords covered by rubber. By providing the steel belts 26, the rigidity of the tire 1 is ensured, and the contact state of the road surface with the tread 13 improves. In the present embodiment, the two-layer structure steel belt (steel belt 261 on inner side and steel belt 262 on outer side) is provided; however, the number of layered steel belts 26 is not limited thereto. It should be noted that a belt made using a tire cord or the like made using aramid fiber may be used in place of the steel belt 26 made using steel belts. It should be noted that, in the two-layer structure steel belt 26 of the present embodiment, the steel belt 261 on the inner side is wider than the steel belt 262 on the outer side. Therefore, the tire-width direction outside end of the steel belt 261 on the inner side includes the tire-width direction outside end 26A of the steel belt 26.

The cap ply 27 is a member arranged on the outer side in the tire-radial direction of the steel belt 26, and has a function as a belt reinforcement layer. The cap ply 27 is configured by an insulative organic fiber layer such as polyamide fiber, and is covered by topping rubber. By providing the cap ply 27, it is possible to achieve an improvement in durability and reduction in load noise while traveling. In the present embodiment, the tire-width direction outside end 27A of the cap ply 27 extends more to the outer side in the tire-width direction than the tire-width direction outside end 26A of the steel belt 26.

The tread rubber 28 is a member constituting tire tread (contact patch with road surface R) 13C. The tread rubber 28 has a tire-width direction outside end 28A. A tread pattern (not shown) constituted by a plurality of grooves is provided to the tire tread 13C of the tread rubber 28.

In the bead 11, sidewall 12 and tread 13, an inner liner 29 as a rubber layer constituting an inner wall surface of the tire 1 is provided to the tire inner cavity side of the carcass ply 23. The inner liner 29 is configured by air permeation resistant rubber, whereby the air inside the tire inner cavity is prevented from leaking to outside.

Herein, as shown in FIG. 1, the sidewall rubber 30 of the sidewall 12 extends towards the tread 13. On the other hand, the tread rubber 28 of the tread 13 extends towards the sidewall 12. As a result thereof, the tread rubber 28 and sidewall rubber 30 enter a layered state, on the tire outer surface side of a partial region of the carcass ply 23. In more detail, in a region in which the sidewall rubber 30 and tread rubber 28 both exist, i.e. movement region of the sidewall 12 and tread 13, the sidewall rubber 30 and tread rubber 28 are in a layered state in order, on the tire outer surface side of the carcass ply 23.

As shown in FIGS. 1 and 2, on the outer side in the tire-width direction of the bead 11 and carcass ply 23 of the sidewall 12, the rim strip rubber 32 and sidewall rubber 30 arranged on the outer side in the tire-radial direction of the rim strip rubber 32 are arranged.

In addition, as shown in FIGS. 1 and 2, in the vicinity of the movement region of the bead 11 and sidewall 12, the rim strip rubber 32 and sidewall rubber 30 enter a layered state in order on the tire outer surface side of the carcass ply 23.

In addition, as shown in FIGS. 1 and 2, the first end 31A of the chamfer 31 is arranged so as to be sandwiched between the ply body 24 of the carcass ply 23 and the inner liner 29. The second end 31B of the chamfer 31 is arranged so as to be sandwiched between the ply folding part 25 of the carcass ply 23 and the rim strip rubber 32.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is established at an antenna length optimized according to the frequency band, etc. to be used. In a storage part inside the RFID chip, identification information such as a manufacturing number and part number is stored.

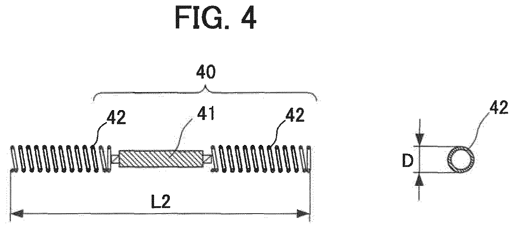

FIG. 4 is a view showing the RFID tag 40 of the present embodiment. The RFID tag 40 of the present embodiment includes an RFID chip 41, and a coil-shaped spring antenna as an antenna 42 for performing communication with external equipment. Herein, the diameter of the metal wire forming the antenna 42 is preferably no more than 0.5 mm. For example, the diameter of this metal wire is at least 0.1 mm and no more than 0.5 mm. The coil diameter D of the coil-shaped spring antenna formed by this metal wire being wound is preferably no more than 2.0 mm. For example, the coil diameter of the coil-shaped spring antenna is at least 1.0 mm and no more than 2.0 mm. The length L2 in the longitudinal direction of the RFID tag 40 including the antenna 42 is preferably at least 30 mm and no more than 70 mm.

In the present embodiment, the RFID tag 40 is arranged between the bead filler 22 and ply body 24. More specifically, the RFID tag 40 is arranged between the tire-width direction inner side of the bead filler 22 and the ply body 24.

In this way, since the RFID tag 40 is provided between the bead filler 22 of high modulus and the ply body 24 which is a fiber layer, the periphery of the RFID tag 40 has little deformation, and stress hardly concentrates. Consequently, the RFID tag 40 is hardly damaged.

Then, between the outer wall surface of the tire 1 and the RFID tag 40, since the steel side ply 50 serving as a metal reinforcement layer, the ply folding part 25 as a fiber layer and the bead filler 22 are present, it is possible to decrease the load on the RFID tag 40. In particular, since the steel side ply 50 serving as the metal reinforcement layer 50 is present near the RFID tag 40, the RFID tag 40 is strongly protected also when force acts from the outer side in the width direction of the tire. The RFID tag 40 is positioned more to the inner side in the tire-radial direction than the tire-radial direction outside end 50A of the steel side ply 50.

In addition, the bead filler 22 is arranged between the RFID tag 40 and steel side ply 50. Although arranging the RFID tag 40 near the steel side ply 50 serving as the metal reinforcement layer, it is thereby possible to ensure a distance between the RFID tag 40 and metal members, and prevent contact therebetween. Consequently, it becomes possible to suppress a decline in performance of the RFID tag 40. For example, in the case of having the antenna 42 as in the RFID tag 40 of the present embodiment, it is possible to suppress a decline in communication quality.

As shown in FIGS. 1 and 2, the RFID tag 40 is preferably arranged at a position closer to the tire-radial direction outside end 22A than the tire-radial direction inside end 22B of the bead filler 22. More preferably, the RFID tag 40 has at least a part thereof arranged more to the outer side in the tire-radial direction than a position 10 mm to the inner side in the tire-radial direction from the tire-radial direction outside end 22A of the bead filler 22. More preferably, the entire portion including the antenna of the RFID tag 40 is arranged more to the outer side in the tire-radial direction than a position 10 mm to the inner side in the tire-radial direction from the tire-radial direction outside end 22A of the bead filler 22. In other words, the RFID tag 40 of the present embodiment is preferably arranged in an area range L1 of 10 mm from the tire-radial direction outside end 22A to the inner side in the tire-radial direction of the bead filler 22, as shown in FIGS. 1 and 2.

The bead core 21 is a metal member having a particularly high possibility of adversely affecting the communication, due to being formed in a ring shape by winding to laminate a bead wire made of metal. Consequently, the RFID tag 40 is better arranged at a position as far as possible from the bead core 21.

In addition, as shown in FIGS. 1 and 2, the steel side ply 50 having a metal cord 51 made of metal is arranged at the outer side in the tire-width direction of the RFID tag 40. As shown in FIG. 3, the steel side ply 50 includes a plurality of metal cords 51 arranged at intervals in the tire circumferential direction. This plurality of metal cords 51 extend obliquely relative to the radial direction R, and are arranged at intervals in the tire circumferential direction C in an oblique state; therefore, the interval G between the plurality of metal cords 51 widens as approaching the outer side in the tire-radial direction.

The steel side ply 50 having the metal cord 51 made of metal is also a member having a possibility of adversely affecting communication. Therefore, by arranging the RFID tag 40 at a position closer to the tire-radial direction outside end 22A than the tire-radial direction inside end 22B of the bead filler 22, for example, it is possible to arrange the RFID tag 40 in a portion where the interval G between the plurality of metal cords 51 becomes wide. The RFID tag 40 thereby comes to hardly receive the influence of the steel side ply 50 having metal cords 51 made of metal. From this viewpoint, the RFID tag 40 is preferably arranged in an area range L1 of 10 mm to the inner side in the tire-radial direction from the tire-radial direction outside end 22A of the bead filler 22. It should be noted that the interval G between the plurality of metal cords 51 is shown by the distance in the circumferential direction of the tire, as shown in FIG. 3.

The steel side ply 50 having the metal cord 51 made of metal is also a member having a possibility of adversely affecting communication. Therefore, for the RFID tag 40, at least part thereof may be arranged in a range L2 of at least 10 mm and no more than 18 mm from the tire-radial direction outside end 50A of the steel side ply 50 to the inner side in the tire-radial direction. It is thereby possible to arrange the RFID tag 40 at a portion where the gap G between the plurality of metal cords 51 becomes wide. The RFID tag 40 thereby comes to hardly receive the influence of the steel side ply 50 having metal cords 51 made of metal.

It should be noted that the interval G between the plurality of metal cords 51 at a portion 50C of the steel side ply 50 at a position closest to the RFID tag 40 shown in FIG. 2 is preferably larger than the diameter of the metal wire forming the antenna 42 of the RFID tag 40. For example, the interval G of this portion is preferably at least 0.5 mm. It is thereby possible to suppress influence on communication. Consequently, it becomes possible to secure favorable communicability between the RFID tag 40 and external reader. More preferably, the average value for the interval G at this portion is at least 0.5 mm and no more than 2.5 mm. It is thereby possible to suppress the influence on communication, while strongly protecting the RFID tag 40.

It should be noted that the RFID tag 40 embedded in the tire has a longitudinal direction when including an antenna, as shown in FIG. 4. Such an RFID tag 40 is preferably embedded in the tire 1, so that the longitudinal direction thereof becomes the circumferential direction of the tire or the direction of the tangent line relative to the circumferential direction of the tire, i.e. direction orthogonal to the paper plane of the cross-sectional view of FIGS. 1 and 2. By embedding in this way, stress hardly acts on the RFID tag 40 also when the tire deforms.

Then, the interval G between the plurality of metal cords 51 in the portion 50C of the steel side ply 50 at the position closest to the RFID tag 40 described above is calculated as an average value for the plurality of intervals G within a range of a length L2 in the longitudinal direction of the RFID tag 40 including the antenna 42.

Herein, the RFID tag 40 of the present embodiment is installed in the tire constituent member before the vulcanization process in the manufacturing process of the tire 1. More specifically, the RFID tag 40 is installed in the bead filler 22 or ply body 24. At this time, the topping rubber of the bead filler 22 and ply body 24 are in the state of raw rubber prior to vulcanization. Consequently, using the adhesiveness of raw rubber, the RFD tag 40 is installed to the bead filler 22 or ply body 24. It should be noted that the RFID tag 40 may be installed using an adhesive or the like. Subsequently, the RFID tag 40 is inserted between the bead filler 22 and ply body 24. After inserted, the green tire in which each tire constituent member including the RFID tag 40 was assembled is vulcanized in the vulcanization step to produce the tire.

In the present embodiment, it is thereby possible to paste the RFID tag 40 to the ply body 24 as a fiber layer or the bead filler 22 covered by the raw rubber having rigidity and having adhesiveness, during tire production. Consequently, in the manufacturing process of the tire, the assembly work of the RFID tag 40 becomes easy. In addition, since the bead filler 22 having little thickness variation during vulcanization is arranged between the RFID tag 40 and steel side ply 50, it is possible to ensure a distance between the RFID tag 40 and steel side ply 50, and suppress a decline in the performance of the RFID tag 40.

It should be noted that, in the present embodiment, the RFID tag 40 is embedded in the tire as an electronic component; however, the electronic component embedded in the tire is not limited to RFID tags. For example, it may be various electronic components such as a sensor which carries out wireless communication. In addition, when the electronic component electrically contacts with a conductive member, a performance change in the electronic component arises, and there is a possibility of becoming difficult to maintain the characteristics of the electronic component. In addition, the electronic component has a possibility of being damaged by excessive stress acting thereon. Consequently, in the case of embedding various electronic components in the tire, it is possible to obtain the effects of the present invention. For example, the electronic component may be a piezoelectric element or strain sensor.

According to the tire 1 of the present embodiment, the following effects are exerted.
(1) The tire 1 according to the present embodiment includes: the bead cores 21; the pair of beads 11 having the bead filler 22 extending to the outer side in the tire-radial direction of the bead core 21; the carcass ply 23 including the ply body 24 extending from one bead core 21 to the other bead core 21, and the ply folding part 25 which is folded back around the bead core 21; the steel side ply 50 serving as a metal reinforcement layer provided between the ply folding part 25 and bead filler 22; and the RFID tag 40 as an electronic component provided between the bead filler 22 and ply body 24. Since the bead filler 22 having little thickness variation during vulcanization is arranged between the RFID tag 40 as the electronic component and the steel side ply 50 as the metal reinforcement layer, it is thereby possible to ensure a distance between the RFID tag 40 and metal members, and suppress a decline in the performance of the RFID tag 40. Consequently, it is possible to maintain the characteristics of the RFID tag 40, even if arranging the RFID tag 40 close to conductive members such as the steel side ply 50 as a metal reinforcement layer.
(2) The RFID tag 40 of the tire 1 according to the present embodiment has at least a part thereof arranged more to the outer side in the tire-radial direction than a position 10 mm to the inner side in the tire-radial direction from the tire-radial direction outside end 22A of the bead filler 22. Since the RFID tag 40 is sufficiently distanced from the bead core 21, it is thereby possible to suppress the influence of the bead core on the RFID tag 40. In addition, since it is a position where the average interval between the plurality of metal cords 51 constituting the steel side ply 50 becomes a wide, it is possible to suppress the influence of the steel side ply 50 on the RFID tag 40. Consequently, it is possible to ensure favorable communicability between the outside and the RFID tag 40.
(3) The steel side ply 50 of the tire 1 according to the present embodiment includes a plurality of metal cords 51 arranged at intervals in the tire circumferential direction, and the rubber 52 covering the plurality of metal cords 51, and the interval between the plurality of metal cords 51 at a portion of the steel side ply 50 at a position closest to the RFID tag 40 is at least 0.5 mm. Suppressing the influence of the steel side ply 50 on the RFID tag 40 becomes possible, and it is thereby possible to ensure favorable communicability between the outside and the RFID tag 40.

### <Second Embodiment>

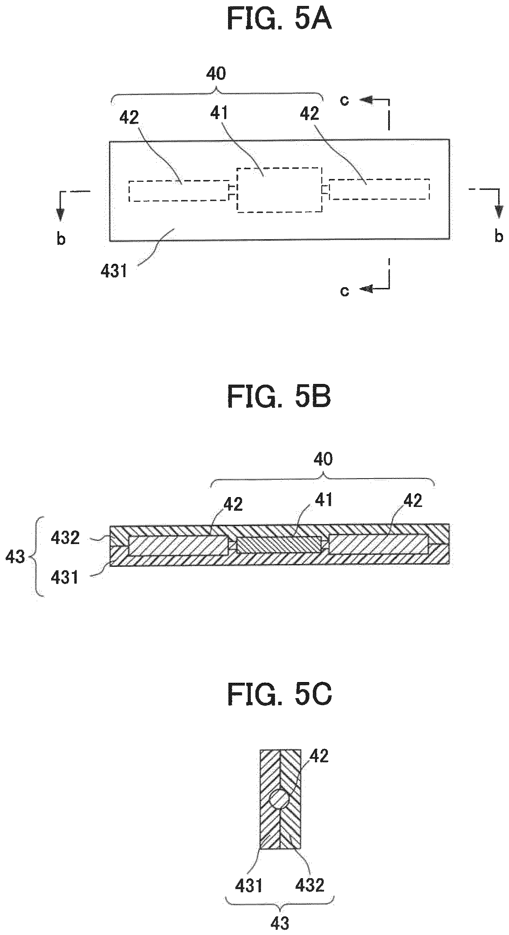

Next, a tire 1 according to a second embodiment will be explained while referencing FIGS. 5A to 5C. It should be noted that, in the following explanation, the same reference number will be assigned for configurations which are the same as the first embodiment, and detailed explanations thereof will be omitted. In the present embodiment, the RFID tag 40 is covered by a protective member 43 configured from a rubber sheet.

FIG. 5A is a view showing the RFID tag 40 covered by the protective member 43 configured from a rubber sheet. In FIG. 5A, the RFID tag 40 is covered and hidden by the rubber sheet 431 described later. FIG. 5B is a cross-sectional view along the line b-b in FIG. 5A, and FIG. 5C is a cross-sectional view along the line c-c in FIG. 5A. In the present embodiment, the RFID tag 40 is covered by the protective member 43, as shown in FIGS. 5A to 5C.

The RFID tag 40 includes the RFID chip 41 and the antenna 42 for performing communication with external equipment. As the antenna 42, a coil-shaped spring antenna, plate-shaped antenna, and various types of rod-shaped antennas can be used, as mentioned above.

The protective member 43 is configured from two rubber sheets 431, 432 which protect the RFID tag 40 by sandwiching.

The protective member 43 is configured from rubber of predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used.

For example, with the modulus of the side wall rubber 30 as a reference, as the rubber used in the protective member 43, it is preferable to use rubber of a modulus 1.1 to 2 times.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40.

In addition, as the protective member 43, an organic fiber layer from polyester fibers or polyamide fibers may be provided. It is also possible to embed an organic fiber layer in the two rubber sheets 431, 432.

In this way, if configuring the protective member 43 by the two rubber sheets 431, 432, since it is possible to thinly form the RFID tag 40 including the protective member 43, it is suitable upon embedding the tire 1. In addition, when assembling the RFID tag 40 to the constituent members of the tire 1 prior to vulcanization, the RFID tag 40 covered by the rubber sheets 431, 432 can be installed very easily. For example, at a desired position of each rubber member prior to vulcanization, it is possible to appropriately paste the RFID tag 40 covered by the rubber sheets 431, 432 using the adhesiveness of the raw rubber. In addition, by also establishing the rubber sheets 431, 432 as raw rubber prior to vulcanization, it is possible to more easily paste by employing the adhesiveness of the rubber sheets 431, 432 itself as well.

However, the protective member 43 is not limited to the form configured by two rubber sheets 431, 432, and can adopt various forms. For example, so long as the rubber sheets constituting the protective member are covering at least part of the RFID tag 40, effects can be obtained such as an improvement in workability in the manufacturing process and stress mitigation. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

It should be noted that, in the present embodiment, the RFID tag 40 comes to be sandwiched between the carcass ply 23 and bead filler 22, in a state covered by the protective member 43. In this case, even under the condition of the RFID tag 40 receiving stress by the carcass ply 23 and bead filler 22 relatively moving, the RFID tag 40 is protected by the presence of the protective member 43. Consequently, the durability of the RFID tag 40 further improves.

It should be noted that the RFID tag 40 covered by the protective member 43 is embedded in the tire 1 so that the longitudinal direction thereof becomes the circumferential direction of the tire 1 or direction of the tangent line relative to the circumferential direction of the tire 1, i.e. direction orthogonal to the paper plane of the cross-sectional views of FIGS. 1 and 2. In the manufacturing process, the surface of either one of the rubber sheets 431, 432 is pasted to the constituent member of the tire 1 prior to vulcanization.

By establishing such a form, stress will hardly act on the RFID tag 40, even when the tire 1 deforms. In addition, in the manufacturing process, the work of attaching the RFID tag 40 covered by the protective member 43 becomes easy.

According to the tire 1 according to the present embodiment, the following effects are exerted in addition to the above (1) to (3).

(4) In the present embodiment, the RFID tag 40 is covered by the rubber sheets 431, 432. The workability in the manufacturing process thereby improves. In addition, effects such as mitigating the stress acting on the RFID tag 40 are obtained.

It should be note that the tire of the present invention can be adopted as various types of tires such as of a car, light truck, truck or bus; however, it is particularly suitable as a tire for a car. It should be noted that the present invention is not to be limited to the above-mentioned embodiment, it is rather limited only by the scope of the appended claims.

### EXPLANATION OF REFERENCE NUMERALS

- 1: tire
- 11: bead
- 12: sidewall
- 13: tread
- 21: bead core
- 22: bead filler
- 22A: tire-radial direction outside end
- 23: carcass ply
- 24: ply body
- 25: ply folding part
- 26: steel belt (belt)
- 27: cap ply
- 28: tread rubber
- 29: inner liner
- 30: sidewall rubber
- 31: chamfer
- 32: rim strip rubber
- 40: RFID tag (electronic component)
- 42: antenna
- 50: steel side ply (metal reinforcement layer)
- 51: metal cord
- 52: rubber

## Claims

1. A tire (1) comprising:
a pair of beads (11) having a bead core (21) and a bead filler (22) which extends to an outer side in a tire-radial direction of the bead core (21);
a carcass ply (23) including a ply body (24) which extends from one bead core (21) to another bead core (21), and a ply folding part (25) which is folded back around the bead core (21);
a metal reinforcement layer (50) provided to interpose the ply folding part (25) and the bead filler (22);
**characterised in that**
an electronic component (40) is provided to interpose the bead filler (22) and the ply body (24).

2. The tire (1) according to claim 1, wherein the electronic component (40) has at least a part thereof disposed more to an outer side in a tire-radial direction than a position 10 mm to an inner side in the tire-radial direction from the tire-radial direction outside end (22A) of the bead filler (22).

3. The tire (1) according to claim 1 or 2, wherein the metal reinforcement layer (50) includes a plurality of metal cords (51) disposed at intervals in a tire circumferential direction, and rubber (52) covering the plurality of metal cords (51), and wherein the interval between the plurality of metal cords at a portion of the metal reinforcement layer (50) at a position closest to the electronic component (40) is at least 0.5 mm.

4. The tire (1) according to claim 3, wherein the interval between the plurality of metal cords is at least 0.5 mm and no more than 2.5 mm.

5. The tire (1) according to claim 3 or 4,
wherein the electronic component (40) includes an antenna (42), and
wherein the interval between the plurality of metal cords is greater than a diameter of metal wire forming the antenna (42) of the electronic component (40).

6. The tire (1) according to claim 5, wherein the diameter of the metal wire forming the antenna (42) of the electronic component (40) is no more than 0.5 mm.

7. The tire (1) according to claim 6, wherein the diameter of the metal wire forming the antenna (42) of the electronic component (40) is at least 0.1 mm and no more than 0.5 mm.

8. The tire (1) according to any one of claims 1 to 7, wherein a tire-radial direction outside end (50A) of the metal reinforcement layer (50) is positioned more to an outer side in the tire-radial direction than the tire-radial direction outside end (22A) of the bead filler (22).

9. The tire (1) according to claim 8, wherein the tire-radial direction outside end (50A) of the metal reinforcement layer (50) is positioned more to an inner side in the tire-radial direction than an end (25A) of the ply folding part (25) .

10. The tire (1) according to any one of claims 1 to 9, wherein the metal reinforcement layer (50) includes a portion disposed to be sandwiched between an outer side in the tire-width direction of the bead core (21) and the ply folding part (25); and a portion disposed to be sandwiched between the outer side in the tire-width direction of the bead filler (22) and the ply folding part (25).

11. The tire (1) according to claim 10, wherein the metal reinforcement layer (50) has a portion disposed to be sandwiched between the ply body (24) and the ply folding part (25) .

12. The tire (1) according to any one of claims 1 to 11, wherein the electronic component (40) is positioned more to an inner side in the tire-radial direction than the tire-radial direction outside end (50A) of the metal reinforcement layer (50) .

13. The tire (1) according to any one of claims 1 to 12, wherein the electronic component (40) is embedded in the tire so that a longitudinal direction thereof is a circumferential direction of the tire or a direction of a tangent line relative to the circumferential direction of the tire.

14. The tire (1) according to any one of claims 1 to 13, wherein at least part of the electronic component (40) is disposed in a range of 10 mm to 18 mm from a tire-radial direction outside end (50A) of the metal reinforcement layer (50) to an inner side in the tire-radial direction.

## Patentansprüche

1. Reifen (1), aufweisend:
ein Paar Wülste (11) mit einem Wulstkern (21) und einem Kernreiter (22), der sich zu einer Außenseite in einer Reifenradialrichtung des Wulstkerns (21) erstreckt;
eine Karkassenlage (23), die einen Lagenkörper (24), der sich von einem Wulstkern (21) zu einem anderen Wulstkern (21) erstreckt, und einen Lagenfaltteil (25) aufweist, der um den Wulstkern (21) zurückgefaltet ist;
eine Metallverstärkungsschicht (50), die derart vorgesehen ist, dass sie zwischen dem Lagenfaltteil (25) und dem Kernreiter (22) angeordnet ist;
**dadurch gekennzeichnet, dass**
eine elektronische Komponente (40) derart vorgesehen ist, dass sie zwischen dem Kernreiter (22) und dem Lagenkörper (24) angeordnet ist.

2. Reifen (1) nach Anspruch 1, wobei die elektronische Komponente (40) zumindest einen Teil davon aufweist, der weiter zu einer Außenseite in einer Reifenradialrichtung angeordnet ist als eine Position 10 mm zu einer Innenseite in der Reifenradialrichtung von dem in Reifenradialrichtung äußeren Ende (22A) des Kernreiters (22).

3. Reifen (1) nach Anspruch 1 oder 2, wobei die Metallverstärkungsschicht (50) eine Vielzahl von Metallkorden (51), die in Abständen in einer Reifenumfangsrichtung angeordnet sind, und Gummi (52) aufweist, das die Vielzahl von Metallkorden (51) bedeckt, und wobei der Abstand zwischen der Vielzahl von Metallkorden an einem Abschnitt der Metallverstärkungsschicht (50) an einer am nächsten an der elektronischen Komponente (40) liegenden Position zumindest 0,5 mm beträgt.

4. Reifen (1) nach Anspruch 3, wobei der Abstand zwischen der Vielzahl von Metallkorden zumindest 0,5 mm und nicht mehr als 2,5 mm beträgt.

5. Reifen (1) nach Anspruch 3 oder 4,
wobei die elektronische Komponente (40) eine Antenne (42) aufweist, und
wobei der Abstand zwischen der Vielzahl von Metallkorden größer ist als ein Durchmesser von Metalldraht, der die Antenne (42) der elektronischen Komponente (40) bildet.

6. Reifen (1) nach Anspruch 5, wobei der Durchmesser des Metalldrahts, der die Antenne (42) der elektronischen Komponente (40) bildet, nicht mehr als 0,5 mm beträgt.

7. Reifen (1) nach Anspruch 6, wobei der Durchmesser des Metalldrahts, der die Antenne (42) der elektronischen Komponente (40) bildet, zumindest 0,1 mm und nicht mehr als 0,5 mm beträgt.

8. Reifen (1) nach einem der Ansprüche 1 bis 7, wobei ein in Reifenradialrichtung äußeres Ende (50A) der Metallverstärkungsschicht (50) weiter zu einer Außenseite in der Reifenradialrichtung positioniert ist als das in Reifenradialrichtung äußere Ende (22A) des Kernreiters (22).

9. Reifen (1) nach Anspruch 8, wobei das in Reifenradialrichtung äußere Ende (50A) der Metallverstärkungsschicht (50) weiter zu einer Innenseite in der Reifenradialrichtung positioniert ist als ein Ende (25A) des Lagenfaltteils (25).

10. Reifen (1) nach einem der Ansprüche 1 bis 9, wobei die Metallverstärkungsschicht (50) einen Abschnitt, der derart angeordnet ist, dass er zwischen einer Außenseite in der Reifenbreitenrichtung des Wulstkerns (21) und dem Lagenfaltteil (25) sandwichartig angeordnet ist; und einen Abschnitt, der derart angeordnet ist, dass er zwischen der Außenseite in der Reifenbreitenrichtung des Kernreiters (22) und dem Lagenfaltteil (25) sandwichartig angeordnet ist, aufweist.

11. Reifen (1) nach Anspruch 10, wobei die Metallverstärkungsschicht (50) einen Abschnitt aufweist, der derart angeordnet ist, dass er zwischen dem Lagenkörper (24) und dem Lagenfaltteil (25) sandwichartig angeordnet ist.

12. Reifen (1) nach einem der Ansprüche 1 bis 11, wobei die elektronische Komponente (40) weiter zu einer Innenseite in der Reifenradialrichtung positioniert ist als das in Reifenradialrichtung äußere Ende (50A) der Metallverstärkungsschicht (50).

13. Reifen (1) nach einem der Ansprüche 1 bis 12, wobei die elektronische Komponente (40) in dem Reifen so eingebettet ist, dass eine Längsrichtung davon eine Umfangsrichtung des Reifens oder eine Richtung einer Tangentenlinie relativ zu der Umfangsrichtung des Reifens ist.

14. Reifen (1) nach einem der Ansprüche 1 bis 13, wobei zumindest ein Teil der elektronischen Komponente (40) in einem Bereich von 10 mm bis 18 mm von einem in Reifenradialrichtung äußeren Ende (50A) der Metallverstärkungsschicht (50) zu einer Innenseite in der Reifenradialrichtung angeordnet ist.

## Revendications

1. Pneumatique (1) comprenant :
une paire de talons (11) présentant une tringle de talon (21) et un bourrage sur talon (22) qui s'étend vers un côté extérieur dans un sens radial de pneumatique de la tringle de talon (21) ;
un pli de carcasse (23) comportant un corps de pli (24) qui s'étend depuis une tringle de talon (21) vers une autre tringle de talon (21), et
une section de pliage de pli (25) qui est repliée autour de la tringle de talon (21) ;
une couche de renforcement métallique (50) fournie pour interposer la section de pliage de pli (25) et le bourrage sur talon (22) ;
**caractérisé en ce que**
un composant électronique (40) est fourni pour interposer le bourrage sur talon (22) et le corps de pli (24).

2. Pneumatique (1) selon la revendication 1, dans lequel le composant électronique (40) présente au moins une section de celui-ci disposée davantage vers un côté extérieur dans un sens radial de pneumatique que vers une position à 10 mm par rapport à un côté intérieur dans le sens radial de pneumatique depuis l'extrémité extérieure dans le sens radial de pneumatique (22A) du bourrage sur talon (22).

3. Pneumatique (1) selon la revendication 1 ou 2, dans lequel la couche de renforcement métallique (50) comporte une pluralité de tringles métalliques (51) disposées à des intervalles dans un sens circonférentiel de pneumatique, et du caoutchouc (52) recouvrant la pluralité de tringles métalliques (51), et dans lequel l'intervalle entre la pluralité de tringles métallique sur une partie de la couche de renforcement métallique (50) est sur une position plus proche du composant électronique (40) d'au moins 0,5 mm.

4. Pneumatique (1) selon la revendication 3, dans lequel l'intervalle entre la pluralité de tringles métalliques est d'au moins 0,5 mm et est inférieur ou égal à 2,5 mm.

5. Pneumatique (1) selon la revendication 3 ou 4,
dans lequel le composant électronique (40) comporte une antenne (42), et
dans lequel l'intervalle entre la pluralité de tringles métalliques est supérieur à un diamètre de fil métallique formant l'antenne (42) du composant électronique (40).

6. Pneumatique (1) selon la revendication 5, dans lequel le diamètre du fil métallique formant l'antenne (42) du composant électronique (40) est inférieur ou égal à 0,5 mm.

7. Pneumatique (1) selon la revendication 6, dans lequel le diamètre du fil métallique formant l'antenne (42) du composant électronique (40) est d'au moins 0,1 mm et est inférieur ou égal à 0,5 mm.

8. Pneumatique (1) selon l'une quelconque des revendications 1 à 7,
dans lequel une extrémité extérieure dans le sens radial de pneumatique (50A) de la couche de renforcement métallique (50) est positionnée davantage vers un côté extérieur dans le sens radial de pneumatique que vers l'extrémité extérieure dans le sens radial de pneumatique (22A) du bourrage sur talon (22) .

9. Pneumatique (1) selon la revendication 8, dans lequel l'extrémité extérieure dans le sens radial de pneumatique (50A) de la couche de renforcement métallique (50) est positionnée davantage vers un côté intérieur dans le sens radial de pneumatique que vers une extrémité (25A) de la section de pliage de pli (25).

10. Pneumatique (1) selon l'une quelconque des revendications 1 à 9,
dans lequel la couche de renforcement métallique (50) comporte une partie disposée pour être mise en sandwich entre un côté extérieur dans le sens de la largeur de pneumatique de la tringle de talon (21) et la section de pliage de pli (25) ; et une partie disposée pour être mise en sandwich entre le côté extérieur dans le sens de la largeur de pneumatique du bourrage sur talon (22) et la section de pliage de pli (25).

11. Pneumatique (1) selon la revendication 10, dans lequel la couche de renforcement métallique (50) présente une partie disposée pour être mise en sandwich entre le corps de pli (24) et la section de pliage de pli (25).

12. Pneumatique (1) selon l'une quelconque des revendications 1 à 11, dans lequel le composant électronique (40) est positionné davantage vers un côté intérieur dans le sens radial de pneumatique que vers l'extrémité extérieure dans le sens radial de pneumatique (50A) de la couche de renforcement métallique (50).

13. Pneumatique (1) selon l'une quelconque des revendications 1 à 12,
dans lequel le composant électronique (40) est intégré dans le pneumatique de telle sorte qu'un sens longitudinal de celui-ci est un sens circonférentiel du pneumatique ou un sens d'une ligne tangentielle par rapport au sens circonférentiel du pneumatique.

14. Pneumatique (1) selon l'une quelconque des revendications 1 à 13, dans lequel au moins une section du composant électronique (40) est disposée dans une plage de 10 mm à 18 mm par rapport à une extrémité extérieure dans le sens radial de pneumatique (50A) de la couche de renforcement métallique (50) vers un côté intérieur dans le sens radial de pneumatique.
